(19) Europäisches Patentamt
European Patent Office
Office européen des brevets

(11) Publication number: **0 121 141**
**A2**

# (12) EUROPEAN PATENT APPLICATION

(21) Application number: 84102471.4

(22) Date of filing: 08.03.84

(51) Int. Cl.³: C 08 F 220/54
G 03 C 1/04, C 09 D 3/74

(30) Priority: 09.03.83 US 473490

(43) Date of publication of application:
10.10.84 Bulletin 84/41

(84) Designated Contracting States:
DE FR GB

(71) Applicant: EASTMAN KODAK COMPANY
343 State Street
Rochester New York 14650(US)

(72) Inventor: Bowman, Wayne Arthur
4822 Lewis Road
Walworth New York 14568(US)

(74) Representative: Brandes, Jürgen, Dr.rer.nat. et al,
Thierschstrasse 8
D-8000 München 22(DE)

## (54) Chill-gelable polymers and their use.

(57) A polymer comprising polymerized N-alkyl substituted acrylamide and a polymerized crosslinking comonomer wherein the polymer has a solubility parameter δ from 13 to 16 at 25°C can be coated and chill-set to retain the integrity of the coated layer during drying. The polymer is useful as an extender for gelatin, particularly in photographic elements.

EP 0 121 141 A2

Croydon Printing Company Ltd

# CHILL-GELABLE POLYMERS AND THEIR USE

The invention relates to polymers which are capable of being chill-gelled. More particularly, the present invention relates to polymers of crosslinked N-alkyl substituted acrylamide having a solubility parameter δ from 13 to 16 at 25°C.

Gelatin is an extremely useful vehicle in photographic elements because it has the ability to be coated and immediately chill-set to retain the integrity of the wet, coated layer during drying. Aside from the obvious problem of running off the support, the property of quick-setting is a very important property in photographic coatings to maintain the homogeneity of the layer(s). For example, in a single layer, chill-setting prevents settling of silver halide grains, or settling or floating to the surface of other insoluble materials, e.g., insoluble matte beads. In multilayer coatings, chill-setting prevents intermixing of separate layers. Chill-setting is therefore an "immediate" step to prevent run-off, and intermixing, and to retain homogeneity.

Gelatin, however, has limited resistance to abrasion, humidity and temperature. The incorporation of polymers or substitution of polymers for gelatin in photographic layers would be desirable to obtain enhanced resistance to abrasion, humidity and temperature; however, synthetic polymers, in general, do not have the desirable chill-gelation capabilities of gelatin.

Various polymers have been suggested for the preparation of microgel dispersions to modify properties of textile products and for other diverse uses. U.S. Patent 3,455,686 describes the use of isopropylacrylamide copolymerized with methanolacrylamide in timing layers for image transfer film units. These polymers, however, do not have a solubility parameter from 13 to 16 at 25°C and are not

chill-gelable and an extended drying time is necessary during film production.

U.S. Patents 3,728,258 and 4,172,066 describe the use of crosslinked polyacrylamides in microgels, but these polymers, also, are not chill-gelable. Thus, a polymer which is chill-gelable and has good abrasion, humidity and temperature resistance would be highly useful in photographic elements.

The problem this invention solves is that of providing a polymer which has good abrasion, humidity and temperature resistance (which properties are not available in gelatin); and which is, as gelatin, chill-gelable.

This problem can be solved with a crosslinked, chill-gelable polymer comprising a) 30 to 97 weight percent of polymerized N-alkyl-substituted acrylamide, b) 3 to 25 weight percent polymerized crosslinking monomer having at least two addition polymerizable groups per molecule and c) 0 to 60 weight percent of one or more other polymerized monomers characterized in that said polymer has a solubility parameter $\delta$ from 13 to 16 at 25°C with the proviso that said other monomers c) comprise less than 5 weight percent of cationic monomers, less than 15 weight percent of free acid monomers and less than 3 weight percent of metal or ammonium salts of acid monomers. These polymers are chill-gelable and have excellent resistance to abrasion, humidity and temperature.

One embodiment of the present invention comprises a microgel dispersion comprising the above-described polymer.

In another embodiment, a photographic element comprises a support having thereon a layer comprising the polymer.

A still further embodiment comprises the use of the dispersion of the aqueous microgel for

coating a substrate. This use entails (a) contacting said substrate with an aqueous dispersion, (b) chill setting the coating at a temperature of less than 10°C and (c) drying the coated support initially at a dry-bulb temperature of greater than 10°C, preferably greater than 15°C and less than 20°C, then gradually increasing the drying temperature to a final wet-bulb temperature of 20 to 28°C characterized in that the dispersion contains the chill-gelable polymer described above.

The chill-gelable polymer comprises from 30 to 97 weight percent of polymerized N-alkyl substituted acrylamide. The preferred acrylamide is N-isopropylacrylamide. Other acrylamides are useful in crosslinked polymers having the requisite solubility parameter. Thus, N-alkyl-substituted acrylamides such as N-*n*-butylacrylamide, N,N-diethylacrylamide and N-*n*-propylacrylamide are also useful herein. The most preferred polymers comprise 60 to 97 weight percent of polymerized N-isopropylacrylamide.

The polymer also comprises from 3 to 25 weight percent of one or more polymerized crosslinking monomers having at least two addition-polymerizable groups per molecule. These crosslinking monomers are generally well known in the art. The preferred crosslinking monomers contain acrylamido or methacrylamido groups to facilitate polymerization with the N-alkyl-substituted acrylamides.

Examples of useful crosslinking monomers include:

N,N'-methylenebisacrylamide;
N,N'-methylenebismethacrylamide;
ethylene dimethacrylate;
2,2-dimethyl-1,3-propylene diacrylate;
divinylbenzene;
mono[2,3-bis(methacryloyloxy)propyl] phosphate;

N,N'-bis(methacryloyl)urea;
triallyl cyanurate;
allyl acrylate;
allyl methacrylate;
N-allylmethacrylamide;
4,4'-isopropylidenediphenylene diacrylate;
1,3-butylene diacrylate;
1,4-cyclohexylenedimethylene dimethacrylate;
2,2'-oxydiethylene dimethacrylate;
divinyloxymethane;
ethylene diacrylate;
ethylidene diacrylate;
propylidene dimethacrylate;
1,6-diacrylamidohexane;
1,6-hexamethylene diacrylate;
1,6-hexamethylene dimethacrylate;
phenylethylene dimethacrylate;
tetramethylene dimethacrylate;
2,2,2-trichloroethylidene dimethacrylate;
ethylenebis(oxyethylene) diacrylate;
ethylenebis(oxyethylene) dimethacrylate;
ethylidyne trimethacrylate;
propylidyne triacrylate;
vinyl allyloxyacetate;
1-vinyloxy-2-allyloxyethane;
2-crotonoyloxyethyl methacrylate;
diallyl phthalate; and
2-(5-phenyl-2,4-pentadienoyloxy) ethyl methacrylate.

The preferred crosslinking monomer is N-N'-methylenebisacrylamide.

The polymer can also comprise 0 to 60 weight percent of polymerized other monomers with the proviso that said other monomers comprise less than 5 weight percent of cationic monomers, less than 15 weight percent of free acid monomers such as acrylic acid, methacrylic acid, itaconic acid and 2-acrylamido-2-methylpropanesulfonic acid, and less than 3 weight percent of metal or ammonium salts of acid monomers so that the polymer has the requisite solubility.

Exemplary water-soluble monomers useful herein which are non-ionic include:

acrylamide;
allyl alcohol;
N-methylolacrylamide;
N-(isobutoxymethyl)acrylamide;
N-(isobutoxymethyl)methacrylamide
glyceryl methacrylate;
2-hydroxyethyl acrylate;
2-hydroxypropyl acrylate;
N-isopropylacrylamide;
N-vinyl-ε-caprolactam;
N-methylmethacrylamide;
methacrylamide;
maleimide;
2-hydroxyethyl methacrylate;
N-methylolmaleimide;
methacryloylurea;
N-(2-hydroxypropyl)methacrylamide;
N-vinylsuccinimide;
N-vinylphthalimide;
2-hydroxypropyl methacrylate;
N-vinyl-2-pyrrolidone;
2-acrylamido-2-hydroxymethyl-1,3-propanediol;
N,N-dimethylmethacrylamide;
N-methylacrylamide;
N-vinyl-N'-(2-hydroxyethyl)succinamide;
N-vinylcarbazole;
N-isopropylmethacrylamide; and
N,N-dimethylacrylamide.

The useful polymers of the present invention have a solubility parameter $\delta$ from 13 to 16 at 25°C. The solubility parameter concept is based on regular solution theory and has found many practical

applications in polymer science, especially the paint and lacquer industries, as an empirical tool for determining polymer-solvent compatibilities. In particular, the solubility parameter, $\delta$, is related to the Flory-Huggins interaction parameter, $\chi_1$, which determines whether a given polymer-solvent system will exist as a single phase ("solution") or as two phases (solvent phase and "sol" phase). In the context of microgel-latexes, the single phase would be represented by the microgel and the two-phase system by the latex.

In the solubility parameter theory, the parameters $\delta_1$ (solvent) and $\delta_2$ (solute) are measures of the intermolecular attractions present in the solvent and the amorphous polymers, respectively. For volatile liquids, $\delta_1$ can be experimentally determined. However, $\delta_2$ for non-volatile materials such as polymers is not experimentally accessible and must be estimated. For such materials, a range of $\delta_2$ is estimated by comparison of polymer solubility and solvent solubility parameters. The more similar the solubility parameters, the more likely is dissolution of the polymer. There are also several procedures available for estimating the solubility parameters of polymers from their chemical structures.

There are four recognized types of polymer-solvent interactions. The first, common to all molecules, is called dispersion forces and results from the fluctuation of atomic dipoles because of the presence of a positive nucleus with electrons surrounding it.

The second type of interaction arises because of the presence of permanent dipoles in the interacting molecules. Such dipole-dipole interactions are characteristic of polar molecules. A related (third) type of interaction results when a permanent dipole on

one molecule induces a temporary dipole in another to create a relatively weak interaction similar to dipole-dipole interaction.

The fourth type of interaction is that which involves hydrogen bonding. Because hydrogen bonding is relatively poorly understood, the presence of such interactions is often a complicating factor in the analysis of solubility parameter data. In the case of aqueous systems, since the solvent is a constant, it is safe to eliminate all factors due to hydrogen bonding and approach the solubility parameter problem based upon the dispersion forces and dipole interactions involved.

Using the standard literature techniques [see C. M. Hansen, J. Paint Tech., 39 (505), 104-117 (1967)], the solubility parameters of a number of representative co- and terpolymers prepared for latex-microgel application are calculated. In the table below are given the compositions, the solubility parameter, $\delta_2$, and phase condition (microgel or latex) present at the temperature of the calculation (25°C, in this case). Because the solubility parameters vary with temperature, marginal systems will exhibit upper and lower critical solution temperatures, as are exhibited by the N-isopropyl acrylamide polymers. As a result, compositions which are latexes at 25°C may show microgel formation at lower temperatures (see Table I).

Comparing the $\delta_2$ values of the polymers with their solution characteristics, there exists a region of $\delta_2$ within which the polymers exhibit the latex microgel transition over the normal temperature range (20°-50°C). In this case, the range of $\delta_2$'s is 13-16. Above 16, the polymer exists as a gel at all temperatures (e.g., poly(N,N-dimethylacrylamide-co-N,N'-methylenebisacrylamide) (90:10), $\delta_2$ =

16.3). Below 13, the polymer remains a latex (e.g., poly(N-n-butylacrylamide-co-methylenebisacrylamide) (90:15), $\delta_2$ = 12.81).

Table I

| Polymer | $\delta_2$ (25°C) | Phase: Predicted 25°C | Phase: Observed at 10-25°C | Remarks* |
|---|---|---|---|---|
| poly(N-isopropylacrylamide-co-N,N'-methylenebisacrylamide) (90/10) | 13.68 | Gel | Gel | Latex at 50°C |
| poly(N-isopropylacrylamide-co-acrylamide-co-N,N'-methylenebis-acrylamide) (85/5/10) | 14.56 | " | " | " |
| poly(N-isopropylacrylamide-co-acrylamide-co-N,N'-methylenebis-acrylamide) (80/10/10) | 15.40 | " | " | " |
| poly(N-isopropylacrylamide-co-acrylamide-co-N,N'-methylenebis-acrylamide) (75/15/10) | 16.19 | | Vis. soln. | Gel at all temp. |
| poly(N-isopropylacrylamide-co-2-hydroxyethyl acrylate-co-N,N'-methylenebisacrylamide) (85/5/10) | 13.65 | Gel | Gel | Latex at 50°C |

Table I (cont'd)

| Polymer | $\delta_2$ (25°C) | Phase: Predicted 25°C | Phase: Observed at 10-25°C | Remarks* |
|---|---|---|---|---|
| poly(N-isopropylacrylamide-co-2-hydroxyethyl acrylate-co-N,N'-methylenebisacrylamide) (80/10/10) | 13.62 | Gel | Gel | Latex at 50°C |
| poly(N-isopropylacrylamide-co-2-hydroxyethyl acrylate-co-N,N'-methylenebisacrylamide) (75/15/10) | 13.59 | " | " | " |
| poly(N-isopropylacrylamide-co-2-hydroxyethyl acrylate-co-N,N'-methylenebisacrylamide) (70/20/10) | 13.56 | " | " | " |
| poly(N-isopropylacrylamide-co-2-hydroxyethyl methacrylate-co-N,N'-methylenebisacrylamide) (85/5/10) | 13.63 | " | " | " |
| poly(N-isopropylacrylamide-co-2-hydroxyethyl methacrylate-co-N,N'-methylenebisacrylamide) (80/10/10) | 13.57 | " | " | " |

Table I (cont'd)

| Polymer | $\delta_2$ (25°C) | Phase: Predicted 25°C | Phase: Observed at 10-25°C | Remarks* |
|---|---|---|---|---|
| poly(N-isopropylacrylamide-co-2-hydroxyethyl methacrylate-co-N,N'-methylenebisacrylamide) (75/15/10) | 13.51 | Gel | Gel | Latex at 50°C |
| poly(N-isopropylacrylamide-co-2-hydroxyethyl methacrylate-co-N,N'-methylenebisacrylamide) (70/20/10) | 12.96 | Marginal gel or latex predicted | " | " |
| poly(N-isopropylacrylamide-co-n-butyl acrylate-co-N,N'-methylenebisacrylamide) (85/5/10) | 13.53 | Gel | " | " |
| poly(N-isopropylacrylamide-co-n-butyl acrylate-co-N,N'-methylenebisacrylamide) (80/10/10) | 13.37 | " | " | " |
| poly(N-isopropylacrylamide-co-n-butyl acrylate-co-N,N'-methylenebisacrylamide) (75/15/10) | 13.22 | Marginal gel | " | " |

Table I (cont'd)

| Polymer | $\delta_2$ (25°C) | Phase: Predicted 25°C | Phase: Observed at 10-25°C | Remarks* |
|---|---|---|---|---|
| poly(N-isopropylacrylamide-co-n-butyl acrylate-co-N,N'-methylenebisacrylamide) (70/20/10) | 13.06 | Probable gel | Vis. soln. (3600 cps at 8-10°C) | Latex at 50°C |
| poly[N-isopropylacrylamide-co-N-(2-hydroxypropyl)acrylamide-co-N,N'-methylenebisacrylamide] (85/5/10) | 13.72 | Gel | Polymer not prepared | |
| poly[N-isopropylacrylamide-co-N-(2-hydroxypropyl)acrylamide-co-N,N'-methylenebisacrylamide] (80/10/10) | 13.79 | " | Gel | Latex at 50°C |
| poly[N-isopropylacrylamide-co-N-(2-hydroxypropyl)acrylamide-co-N,N'-methylenebisacrylamide] (75/15/10) | 13.84 | " | " | " |
| poly[N-isopropylacrylamide-co-N-(2-hydroxypropyl)acrylamide-co-N,N'-methylenebisacrylamide] (70/20/10) | 13.90 | " | " | " |

Table I (cont'd)

| Polymer | $\delta_2$ (25°C) | Phase: Predicted 25°C | Phase: Observed at 10-25°C | Remarks* |
|---|---|---|---|---|
| poly(N-isopropylacrylamide-co-2-ethylhexyl acrylate-co-N,N'-methylenebisacrylamide) (85/5/10) | 13.56 | Gel | Polymer not prepared | |
| poly(N-isopropylacrylamide-co-2-ethylhexyl acrylate-co-N,N'-methylenebisacrylamide) (80/10/10) | 13.44 | " | Gel | Latex at 50°C |
| poly(N-isopropylacrylamide-co-2-ethylhexyl acrylate-co-N,N'-methylenebisacrylamide) (75/15/10) | 13.31 | Marginal gel | Polymer not prepared | |
| poly(N-isopropylacrylamide-co-2-ethylhexyl acrylate-co-N,N'-methylenebisacrylamide) (70/20/10) | 13.19 | Probable gel | Gel | Latex at 50°C |
| poly(N,N-dimethylacrylamide-co-N,N'-methylenebisacrylamide) (90/10) | 16.3 | Gel | " | Gel at all temp. |
| poly(N,N-diethylacrylamide-co-N,N'-methylenebisacrylamide) (90/10) | 14.32 | " | " | Latex at 50° |

0121141

Table I (cont'd)

| Polymer | $\delta_2$ (25°C) | Phase: Predicted 25°C | Phase: Observed at 10-25°C | Remarks* |
|---|---|---|---|---|
| poly(N-ethylacrylamide-co-N,N'-methylenebisacrylamide) (90/10) | 14.25 | Gel | | Gel at 50° |
| poly(N-ethylmethacrylamide-co-N,N'-methylenebisacrylamide) (90/10) | 13.1 | Marginal gel | Not prepared | |
| poly(N-n-butylacrylamide-co-N,N'-methylenebisacrylamide) (90/10) | 12.81 | Latex | Latex | Latex at 50°C |
| poly(N-n-propylacrylamide-co-N,N'-methylenebisacrylamide) (90/10) | 13.12 | Marginal gel | Gel | " |
| poly(N-ethyl-N-methylacrylamide-co-N,N'-methylenebisacrylamide) (90/10) | 15.15 | Gel | Not prepared | |
| poly(N,N-dimethylmethacrylamide-co-N,N'-methylenebisacrylamide) (90/10) | 14.76 | " | Gel | Latex at 50°C |

Table I (cont'd)

| Polymer | $\delta_2$ (25°C) | Phase: Predicted 25°C | Phase: Observed at 10-25°C | Remarks* |
|---|---|---|---|---|
| poly(N,N-diethylmethacrylamide-co-N,N'-methylenebisacrylamide) (90/10) | 13.38 | Marginal gel | Not prepared | |

*With the exception of poly(N-isopropylacrylamide-co-acrylamide-co-N,N'-methylenebisacrylamide) (75/15/10) and poly(N,N'-dimethylacrylamide-co-N,N'-methylenebisacrylamide), all samples were predicted to be latexes at 50°C.

The above polymer compositions are crosslinked, chill-gelable microgels having a solubility parameter of from 13 to 16 at 25°C. "Chill-gelable microgel" means that in aqueous dispersions the polymer exists above 50°C as small latex particles, generally having average diameter of less than 0.5 μ preferably less than 0.3 μ indicative of little swelling, the dispersion thus having low dispersion viscosity typical of latex dispersions; and at temperatures at or below 10°C the dispersions are more translucent and are viscous gels of highly swollen polymer having particle sizes above 0.5 μ, generally 0.8 to 1.1 μ, the gel having a Brookfield viscosity of at least 1000 cp at 10°C when the solid content of the dispersion is 8 to 10% or higher.

Preferred polymers described above are those having recurring units having the structure:

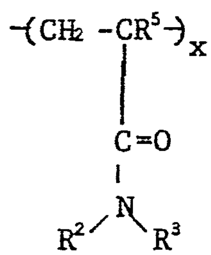 and 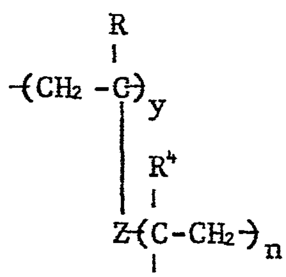 and $-(R^1)_z-$

wherein Z is a linking group; R and $R^4$ are individually hydrogen or methyl; $R^1$ represents recurring units in the polymer of one or more polymerized addition polymerizable comonomers; $R^2$ is alkyl of 1 to 6 carbon atoms or aryl; $R^3$ is hydrogen, aryl or alkyl of 1 to 6 carbon atoms; $R^5$ is H or $CH_3$; n is 1 or 2; x represents 30 to 97 weight percent; y represents 3 to 25 weight percent and z represents 0 to 30 weight percent; with the proviso that $R^1$ comprises less than 5 percent by weight of the polymer that is derived from cationic monomers, less than 15 percent by weight of the polymer that is derived from free acid monomers and less than 3 percent by weight

of polymer that is derived from metal or ammonium salts of acid monomers.

In the above structure, Z is a linking group between separate polymer backbone chains and can be a heteroatom linking group such as an ester, amide, urylenedicarbonyl, urethane, ether, imino, or the like linking group, or an "n + 1" valent nucleus of one or a combination of aliphatic, aromatic, cyclic, and heterocyclic nuclear groups having 0 to n + 1 heteroatom linking groups aforementioned, or combinations thereof. Thus, Z has one covalent bond to each ($CH_2$ -CR) group present. Preferred nuclei include alkylenebis(iminocarbonyl) such as methylenebis(iminocarbonyl); alkylenebis(oxycarbonyl) such as ethylenebis(oxycarbonyl), ureylenedicarbonyl; or arylene such as phenylene.

$R^1$ represents recurring units of 1 or more other polymerized addition polymerizable compounds such as previously described.

$R^2$ is a straight or branched chain alkyl of 1 to 6 carbon atoms, preferably from 1 to 3 carbon atoms, including substituted alkyl such as methyl, ethyl, isopropyl, chloroethyl, butyl and isobutyl.

$R^3$ is hydrogen or a straight or branched chain alkyl as described for $R^2$.

Preferred polymers useful herein include poly(N-isopropylacrylamide-co-N,N'-methylenebisacrylamide) (90:10), poly(N-isopropylacrylamide-co-acrylamide-co-N,N'-methylenebisacrylamide) (70-85:5-20:10), poly(N-isopropylacrylamide-co-2-hydroxyethyl acrylate-co-N,N'-methylenebisacrylamide) (70-85:5-20:10) and poly(N-isopropylacrylamide-co-ethyl methacrylate-co-N,N'-methylenebisacrylamide) (70-85:5-20:10).

The above polymers generally have molecular weights of from 100,000 to 1,000,000 and preferably from 100,000 to 500,000. The particle size of the polymers is preferably 0.2 to 0.5 μ.

The above polymers are formed by randomly polymerizing the monomers together. The polymerization can be carried out using catalysts such as potassium persulfate and 4,4'-azobis(4-cyanovaleric acid) and heating for a period of 60 minutes to 180 minutes at 60°C to 80°C. The resulting polymer is hydrophilic and the crosslinking must be done during polymerization, rather than after polymerization to form a latex, i.e. dispersion rather than solution polymer, and attain the chill-gelable microgel properties.

The above polymers are prepared in the form of chill-gelable microgel dispersions by simply polymerizing the selected monomers in aqueous dispersions by conventional emulsion polymerization techniques at elevated temperature, e.g., above 60°C, preferably at 70°C to 80°C to form a polymer latex, and cooling to ambient temperature. The resulting microgel dispersions preferably contain 10 to 20 percent solids and gelatin is preferably added to the dispersions. The dispersion can also comprise addenda such as development inhibitors or accelerators, coating aids and hardeners.

The microgel dispersions are quite useful in formulating layers of photographic elements. The microgel dispersions are coated on a suitable photographic support such as poly(ethylene terephthalate), glass or metal and first congealing at less than 10°C preferably approximately 4.5°C (chill-gelling) and then air drying at temperatures of 18°C. The element can be overcoated with a layer or series of layers after chill-gelling and prior to drying.

The coating for photographic elements preferably contains from 20 to 80 weight percent of gelatin. The layer, after chill-gelation, is preferably coated on, or incorporated in light-

sensitive emulsion layers or layers containing photographic addenda by multicoating operations and then dried at elevated temperatures. At high or low temperature, coated layers of the polymers are insoluble in, but permeable by, conventional processing solutions.

The following examples are presented to illustrate more fully the invention.

Example 1 - Preparation of microgel composition comprising poly(N-isopropylacrylamide-co-N,N'-methylenebisacrylamide) (90:10)

To a 1-liter addition header was added 800 mℓ of distilled water, 180.0 g of N-isopropylacrylamide and 20.0 g of N,N'-methylenebisacrylamide. The solution was bubbled with nitrogen for 10 minutes and 16 mℓ of a 30% solution of Triton 770® surfactant (the sodium salt of an alkylaryl polyether sulfate sold by Rohm and Haas Co.) was added. To a 2-liter three-necked flask was added 800 mℓ of distilled water. The flask was placed in an 80°C bath, stirred and the water bubbled with nitrogen for 10 minutes. To the flask was then added 16 mℓ of 30% Triton 770®, 2.00 g of potassium persulfate, 0.40 g of sodium metabisulfite followed immediately by the addition of the contents of the addition header over a period of 30 minutes. The resulting bluish white latex was stirred at 80°C under nitrogen for an additional hour. The latex was then cooled to 40°C and dialyzed against distilled water for 16 hours at 40°C. The latex was then cooled to 25°C to give a colorless, translucent gel containing 9.4% solids.

Example 2 - Preparation of microgel composition comprising poly(N-isopropylacrylamide-co-2-hydroxyethyl acrylate-co-N,N'-methylenebisacrylamide) (70:20:10)

To a 1-liter addition header was added 400 mℓ of distilled water, 70.0 g of

N-isopropylacrylamide, 20.0 g of 2-hydroxyethyl acrylate, 10.0 g of N,N'-methylenebisacrylamide and 8 mℓ of a 30% solution of Triton 770®. The solution was degassed with nitrogen and the header contents were added over a period of 30 minutes to a solution of 1.00 g of potassium persulfate, 0.20 g of sodium metabisulfite and 8 mℓ of a 30% solution of Triton 770® in 400 mℓ of distilled water at 80°C. The resulting latex was stirred at 80°C under nitrogen for 1 hour and then cooled to 40°C and dialyzed against distilled water at 40°C for 16 hours. The latex was then cooled to 25°C to give a hazy very viscous solution containing 10.3% solids.

Example 3 - Image Transfer Receiver Containing Microgel

An image transfer receiver, activator solution and dye donor sheet were prepared to illustrate and compare the rate of dye migration through a receiver overcoat layer containing gelatin plus the microgel versus that of a gelatin overcoat only.

The receiver consisted of the following structure:

3. Overcoat layer:
   Poly(N-isopropylacrylamide-co-2-hydroxyethyl acrylate-co-N,N'-methylenebisacrylamide) (75:15:10 weight ratio) (8.1 $g/m^2$), gelatin (2.7 $g/m^2$)
   Note: The overcoat layer of the control consisted of 10.8 $g/m^2$ gelatin only.
2. Reflecting layer:
   Titanium dioxide (1.6 $g/m^2$), gelatin (0.86 $g/m^2$)
1. Mordant layer:
   Poly(styrene-co-N-benzyl-N,N-dimethyl-N-vinylbenzylammonium chloride-co-divinylbenzene) (49.5:49.5:1 weight ratio) (2.3 $g/m^2$), gelatin (2.3 $g/m^2$)

coated on clear polyester support.

The overcoat layer of the control (gelatin only) and example (gelatin plus microgel) were each

coated by applying an aqueous solution of the solids from a coating hopper to the moving polyester support. The moving coated wet layer was first congealed at approximately 4.5°C (40°F) and was then air-dried at a series of increasing temperatures up to a final wet-bulb temperature of 18.3°C (65°F) at the dry point.

An activator solution of the following composition was prepared:

| | |
|---|---|
| potassium hydroxide | 0.6N |
| 5-methylbenzotriazole | 3.0 g/ℓ |
| 11-aminoundecanoic acid | 2.0 g/ℓ |
| potassium bromide | 2.0 g/ℓ |
| potassium sulfite | 8.0 g/ℓ |

A dye-donor cover sheet was prepared by coating the following overcoat on top of a neutralizing and timing layer equivalent to that described in Example 1 of U.S. Patent 4,353,973.

A magenta azo dye having the structure:

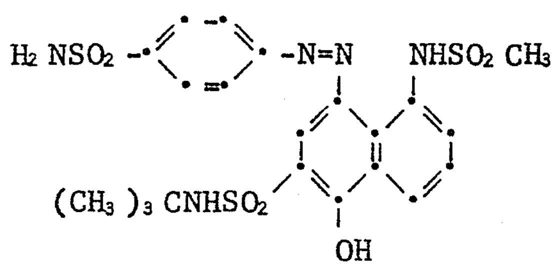

was coated on the sheet at 0.16 $g/m^2$ in 2.7 $g/m^2$ hydroxyethyl cellulose.

The receiver was soaked in the activator contained in a shallow-tray processor for 20 seconds at room temperature (22°C) and then laminated to the dye-donor cover sheet. The rate of dye diffusing to the mordant of the receiver was read as Status A reflection density as a function of time using a MacBeth densitometer.

A comparison of the relative effectiveness of dye diffusion through the experiment overcoat (gelatin plus microgel) versus control overcoat (gelatin only) was made by comparing the rate constants for dye

diffusion or by comparing the relative time required to attain an equal dye density. The following data indicate that when the microgel polymer is partially substituted for gelatin, improved diffusion of a photographic dye is obtained.

| | Relative k (ℓ/sec) | Relative Time to an Equivalent Density |
|---|---|---|
| Control (gelatin only) | 117 | 260 sec |
| Example 3 (microgel plus gelatin) | 152 | 195 sec |
| Ratio | 0.76 | |

Examples 4-5 - Chill-gelability of crosslinked polyacrylamides

Temperature viscosity properties of the following polymers were obtained:

Example 4 - poly(N-propylacrylamide-co-N,N'-methylenebisacrylamide) (90:10) $\delta_2$ = 13.12

Example 5 - poly(N,N-diethylacrylamide-co-N,N'-methylenebisacrylamide) (90:10) $\delta_2$ = 14.32

Control 1 - poly(N,N-dimethylacrylamide-co-N,N'-methylenebisacrylamide) (90:10) $\delta_2$ = 16.3

Control 2 - poly(N-*n*-butylacrylamide-co-N,N'-methylenebisacrylamide) (90:10) $\delta_2$ = 12.81

The examples were both latexes above 40°C and solutions below 25°C. Control 1 was a swollen gel at all temperatures and Control 2 was a latex at all temperatures. Thus, only the examples were chill-gelable polymers.

Examples 6-42

A variety of polymers were prepared and their ability to chill-gel was determined by cooling and measuring the viscosity with a Brookfield viscometer. The "gel points" recorded in Table II are the points at which the viscosity of a microgel having at least 8-10% solids rose above 2000 cps where it is

considered to be "infinite". Although some of the microgels had not reached their "gel point" at 10°C, they were sufficiently viscous (over 1000 cps) to be considered chill-gelable. Polymers outside the scope of the invention are also shown in Table II.

Table II

Gel Points

| Example No. | Composition | $\delta_2$ | Percent Solids | Gel point °C | Comments |
|---|---|---|---|---|---|
| 6 | poly(N-isopropylacrylamide-co-2-hydroxyethyl acrylate-co-N,N'-methylenebisacrylamide) (85/5/10) | | 8.9 | 15 | |
| 7 | poly(N-isopropylacrylamide-co-2-hydroxyethyl acrylate-co-N,N'-methylenebisacrylamide) (82.5/7.5/10) | | 9.4 | 22 | |
| 8 | poly(N-isopropylacrylamide-co-2-hydroxyethyl acrylate-co-N,N'-methylenebisacrylamide) (80/10/10) | | 9.0 | 17 | |
| 9 | poly(N-isopropylacrylamide-co-2-hydroxyethyl acrylate-co-N,N'-methylenebisacrylamide) (75/15/10) | | 9.2 | 16 | |
| 10 | poly(N-isopropylacrylamide-co-2-hydroxyethyl acrylate-co-N,N'-methylenebisacrylamide) (75/15/10) | | 14.2 | 26 | |
| 11 | poly(N-isopropylacrylamide-co-2-hydroxyethyl acrylate-co-N,N'-methylenebisacrylamide) (70/20/10) | | 14.9 | 25 | |

Table II (cont'd)

Gel Points

| Example No. | Composition | $\delta_2$ | Percent Solids | Gel point °C | Comments |
|---|---|---|---|---|---|
| 12 | poly[N-isopropylacrylamide-co-N-(2-hydroxypropyl)methacrylamide-co-N,N'-methylenebisacrylamide] (75/15/10) | | 9.5 | 22 | |
| 13 | poly[N-isopropylacrylamide-co-N-(2-hydroxypropyl)methacrylamide-co-N,N'-methylenebisacrylamide] (70/20/10) | | 9.7 | 24 | |
| 14 | poly(N-isopropylacrylamide-co-acrylamide-co-N,N'-methylene-bisacrylamide)(80/10/10) | | 7.7 | 12 | |
| 15 | poly(N-isopropylacrylamide-co-acrylic acid-co-N,N'-methylene-bisacrylamide) (80/10/10) | | 8.7 | 14 | |
| 16 | poly(N-isopropylacrylamide-co-acrylic acid-co-N,N'-methylene-bisacrylamide) (85/5/10) | | 8.9 | 15 | |
| 17 | poly(N-isopropylacrylamido-co-methacrylamide-co-N,N'-methylene-bisacrylamide) (80/10/10) | | 8.5 | 11 | |

Table II (cont'd)

Gel Points

| Example No. | Composition | $\delta_2$ | Percent Solids | Gel point °C | Comments |
|---|---|---|---|---|---|
| 18 | poly(N-isopropylacrylamide-co-methacrylamide-co-N,N'-methylene-bisacrylamide) (85/5/10) | | 9.2 | 13 | |
| 19 | poly(N-isopropylacrylamide-co-2-hydroxyethyl acrylate co-N,N'-methylenebisacrylamide) (75/15/10) | | 16.0 | 28 | |
| 20 | poly(N-isopropylacrylamide-co-N,N'-methylenebisacrylamide) (90/10) | | 10.2 | 30 | |
| 21 | poly(N-isopropylacrylamide-co-2-hydroxyethyl methacrylate-co-N,N'-methylenebisacrylamide) (80/10/10) | | 11.1 | 30 | |
| 22 | poly(N-isopropylacrylamide-co-2-hydroxyethyl methacrylate-co-N,N'-methylenebisacrylamide) (70/20/10) | 12.96 | 10.9 | 10 | |
| 23 | poly(N-isopropylacrylamide-co-2-ethylhexyl acrylate-co-N,N'-methylenebisacrylamide) (80/10/10) | 13.44 | 10.8 | 12 | |

Table II (cont'd)

Gel Points

| Example No. | Composition | $\delta_2$ | Percent Solids | Gel point °C | Comments |
|---|---|---|---|---|---|
| 24 | poly(N-isopropylacrylamide-co-2-ethylhexyl acrylate-co-N,N'-methylenebisacrylamide) (70/20/10) | 13.19 | 10.5 | none | (7500 cp @ 8-10°C) |
| 25 | poly(N-isopropylacrylamide-co-2-chloroethyl acrylate-co-N,N'-methylenebisacrylamide) (70/20/10) | | 10.5 | 10 | |
| 26 | poly(N-isopropylacrylamide-co-N,N'-methylenebisacrylamide) (80/20) | | 10.2 | 30 | |
| Control 3 | poly(N-isopropylacrylamide-co-sodium 2-acrylamido-2-methylpropane-sulfonate-co-N,N'-methylenebis-acrylamide) (80/10/10) | | 5.5 | none | |
| Control 4 | poly(N-isopropylacrylamide-co-sodium 2-acrylamido-2-methylpropanesulfonate-co-N,N'-methylenebisacrylamide) (85/5/10) | | 7.4 | none | |

Table II (cont'd)

Gel Points

| Example No. | Composition | $\delta_2$ | Percent Solids | Gel point °C | Comments |
|---|---|---|---|---|---|
| Control 5 | poly(N-isopropylacrylamide-co-sodium 2-acrylamido-2-methylpropane-sulfonate-co-N,N'-methylenebis-acrylamide) (75/15/10) | | 7.1 | none | |
| Control 6 | poly(N-isopropylacrylamide-co-diacetoneacrylamide-co-N,N'-methylenebisacrylamide) (70/20/10) | | 10.6 | none | |
| 27 | poly(N-isopropylacrylamido-co-methacrylamide-co-N,N'-methylene-bisacrylamide) (70/20/10) | | 10.7 | 30 | |
| 28 | poly(N-isopropylacrylamide-co-2-hydroxyethyl methacrylate-co-N,N'-methylenebisacrylamide) (60/30/10) | | 10.0 | 14 | |
| 29 | poly(N-isopropylacrylamide-co-2-hydroxyethyl methacrylate-co-2-hydroxyethyl acrylate-co-N,N'-methylenebisacrylamide) (50/30/10/10) | | 11.1 | 10 | (65,000 cp @ 8-10°C) |

Table II (cont'd)

Gel Points

| Example No. | Composition | $\delta_2$ | Percent Solids | Gel point °C | Comments |
|---|---|---|---|---|---|
| Control 7 | poly(N-isopropylacrylamide-co-2-hydroxyethyl acrylate-co-N,N'-methylenebisacrylamide) (70/29/1) | | 9.8 | none | |
| Control 8 | poly(N-isopropylacrylamide-co-2-hydroxyethyl acrylate-co-N,N'-methylenebisacrylamide) (60/39/1) | | 6.2 | none | |
| 30 | poly[N-isopropylacrylamide-co-N-(2-methacryloyloxyethyl)-N,N,N-trimethylammonium methosulfate-co-N,N'-methylenebisacrylamide] (85/5/10) | | 9.1 | 10 | |
| 31 | poly(N-isopropylacrylamide-co-acrylamide-co-N,N'-methylenebisacrylamide) (80/10/10) | | 10.1 | 31 | |
| 32 | poly(N-isopropylacrylamide-co-acrylamide-co-N,N'-methylenebisacrylamide) (70/10/20) | | 10.0 | 30 | |

0121141

Table II (cont'd)

Gel Points

| Example No. | Composition | $\delta_2$ | Percent Solids | Gel point °C | Comments |
|---|---|---|---|---|---|
| Control 9 | poly(N-isopropylacrylamide-co-acrylamide-co-N,N'-methylenebis-acrylamide)(75/15/10) | 16.19 | 6.7 | none | clear, very vis at 10°C |
| Control 10 | poly(N-isopropylacrylamide-co-acrylamide-co-N,N'-methylenebis-acrylamide) (70/20/10) | > 16.19 | 8.7 | none | clear, very vis at 10°C (400 cp) |
| 33 | poly(N-isopropylacrylamide-co-acrylamide-co-N,N'-methylenebis-acrylamide) (65/20/15) | | 7.8 | 25 | latex was viscous |
| Control 11 | poly(N-isopropylacrylamide-co-2-hydroxyethyl acrylate-co-sodium 2-acrylamido-2-methylpropane-sulfonate-co-N,N'-methylenebis-acrylamide) (85/5/5/10) | | 7.6 | none | vis soln at 8°C |
| Control 12 | poly(N-isopropylacrylamide-co-acrylamide-co-N,N'-methylenebis-acrylamide)(67/20/13) | | 8.1 | none | vis soln at 8°C |

Table II (cont'd)

Gel Points

| Example No. | Composition | $\delta_2$ | Percent Solids | Gel point °C | Comments |
|---|---|---|---|---|---|
| Control 13 | poly(N-isopropylacrylamide-co-acrylamide-co-sodium 2-acrylamido-2-methylpropanesulfonate-co-N,N'-methylenebisacrylamide) (75/5/5/15) | | 6.6 | none | vis soln at 10°C |
| 34 | poly(N-isopropylacrylamide-co-acrylamide-co-sodium 2-acrylamido-2-methylpropanesulfonate-co-N,N'-methylenebisacrylamide) (70/5/5/20) | | 7.6 | none | latex had some vis (1160 cp @ 8-10°C) |
| 35 | poly(N-isopropylacrylamide-co-2-hydroxyethyl acrylate-co-N,N'-methylenebisacrylamide) (85/5/10) | | 9.1 | 13 | |
| 36 | poly(N-isopropylacrylamide-co-2-hydroxyethyl acrylate-co-N,N'-methylenebisacrylamide) (75/15/10) | | 9.0 | 13 | (8900 cp @ 8-10°C) |
| 37 | poly(N-isopropylacrylamide-co-acrylamide-co-N,N'-methylenebis-acrylamide) (87.5/2.5/10) | | 9.0 | 13 | |

Table II (cont'd)

Gel Points

| Example No. | Composition | $\delta_2$ | Percent Solids | Gel point °C | Comments |
|---|---|---|---|---|---|
| 38 | poly(N-isopropylacrylamide-co-N-vinyl-2-pyrrolidone-co-N,N'-methylenebis-acrylamide) (85/5/10) | | 8.9 | 12 | white gel |
| 39 | poly(N-isopropylacrylamide-co-N-vinyl-2-pyrrolidone-co-N,N'-methylenebis-acrylamide) (70/20/10) | | 7.5 | 13 | " |
| 40 | poly(N-isopropylacrylamide-co-acrylamide-co-N,N'-methylenebis-acrylamide) (66/20/14) | | 8.3 | 12 | weak gel |
| 41 | poly(N-isopropylacrylamide-co-2-hydroxyethyl acrylate-co-sodium 2-acrylamido-2-methylpropanesulfonate-co-N,N'-methylenebisacrylamide) (80/8/2/10) | | 8.6 | 12 | |
| 42 | poly(N-isopropylacrylamide-co-acrylamide-co-sodium 2-acrylamido-2-methylpropanesulfonate-co-N,N'-methylenebisacrylamide) (85/3/2/10) | | 7.8 | none | clear soln at 12°C, very vis (1080 cp @ 8-10°C) |

Table II (cont'd)

Gel Points

| Example No. | Composition | $\delta_2$ | Percent Solids | Gel point °C | Comments |
|---|---|---|---|---|---|
| 43 | poly(N-isopropylacrylamide-co-2-hydroxyethyl acrylate-co-styrene-co-N,N'-methylenebisacrylamide) (75/10/5/10) | | 9.0 | none | clear vis soln at 12°C (3440 cp @ 8-10°C) |
| 44 | poly(N-isopropylacrylamide-co-N-(3-acetoacetamidopropyl)methacrylamide-co-N,N'-methylenebisacrylamide) (85/5/10) | | 9.3 | 20 | clear gel |
| 45 | poly(N-isopropylacrylamide-co-2-hydroxyethyl acrylate-co-N-(3-acetoacetamidopropyl)methacrylamide-co-N,N'-methylenebisacrylamide) (80/5/5/10) | | 8.8 | 14 | hazy gel |
| 46 | poly(N-isopropylacrylamide-co-N,N-dimethylacrylamide-co-N,N'-methylene-bisacrylamide) (85/5/10) | | 7.9 | 16 | clear gel |
| 47 | poly(N-isopropylacrylamide-co-N,N-dimethylacrylamide-co-N,N'-methylene-bisacrylamide) (80/10/10) | | 8.5 | 20 | clear gel |

Table II (cont'd)

Gel Points

| Example No. | Composition | $\delta_2$ | Percent Solids | Gel point °C | Comments |
|---|---|---|---|---|---|
| 48 | poly(N-isopropylacrylamide-co-N,N-dimethylacrylamide-co-N,N'-methylene-bisacrylamide) (75/15/10) | | 8.5 | 13 | clear gel |
| 49 | poly(N-isopropylacrylamide-co-2-hydroxyethyl acrylate-co-N,N'-methylenebisacrylamide) (80/5/15) | | 8.6 | none | hazy, vis soln at 12°C (2760 cp @ 8-10°C) |
| 50 | poly(N-isopropylacrylamide-co-2-hydroxyethyl acrylate-co-N,N'-methylenebisacrylamide) (75/10/15) | | 8.6 | none | 12°C clear, very vis soln (3800 cp @ 8-10°C) |
| 51 | poly(N-isopropylacrylamide-co-2-hydroxyethyl acrylate-co-N,N'-methylenebisacrylamide) (70/15/15) | | 8.6 | none | 13°C clear, very vis soln (3840 cp @ 8-10°C) |
| 52 | poly(N-isopropylacrylamide-co-2-hydroxyethyl acrylate-co-N,N'-methylenebisacrylamide) (75/5/20) | | 9.1 | none | 13°C clear, very vis soln (2080 cp @ 8-10°C) |
| Control 14 | poly(N-isopropylacrylamide-co-2-hydroxyethyl acrylate-co-N,N'-methylenebisacrylamide) (65/15/20) | | 8.1 | none | 13°C hazy, slightly vis soln (960 cp @ 8-10°C) |

Table II (cont'd)

Gel Points

| Example No. | Composition | $\delta_2$ | Percent Solids | Gel point °C | Comments |
|---|---|---|---|---|---|
| 53 | poly(N-isopropylacrylamide-co-2-hydroxyethyl acrylate-co-N,N'-methylenebisacrylamide) (70/10/20) | | 8.4 | none | 13°C hazy vis soln (1760 cp @ 8-10°C) |
| 54 | poly(N-isopropylacrylamide-co-sodium 2-acrylamido-2-methylpropane-sulfonate-co-N,N'-methylenebis-acrylamide) (88/2/10) | | 13.5 | none | 13°C clear, very vis soln |
| | | | 10.0 | none | (4800 cp @ 8-10°C) |
| 55 | poly(N-isopropylacrylamide-co-sodium 2-acrylamido-2-methylpropane-sulfonate-co-N,N'-methylenebis-acrylamide) (89/1/10) | | 10.9 | 12 | clear gel (12,200 cp @ 8-10°C) |
| 56 | poly(N-isopropylacrylamido-co-methacrylamide-co-N,N'-methylenebis-acrylamide) (70/20/10) | | 8.4 | none | 12°C, very vis soln (1600 cp @ 8-10°C) |
| 57 | poly(N-isopropylacrylamide-co-acrylic acid-co-N,N'-methylenebis-acrylamide) (75/15/10) | | 9.5 | 14 | clear gel |

Table II (cont'd)

Gel Points

| Example No. | Composition | $\delta_2$ | Percent Solids | Gel point °C | Comments |
|---|---|---|---|---|---|
| Control 15 | poly(N-isopropylacrylamide-co-sodium 2-acrylamido-2-methylpropane-sulfonate-co-N,N'-methylenebis-acrylamide) (75/15/10) | | 9.5 | none | 12°C, slightly vis soln |

CLAIMS:

1. A polymer comprising a) 30 to 97 weight percent of polymerized N-alkyl-substituted acrylamide, b) 3 to 25 weight percent of polymerized crosslinking monomer having at least two addition-polymerizable groups per molecule and c) 0 to 60 weight percent of one or more other polymerized monomers, characterized in that said polymer is chill-gelable and has a solubility parameter δ from 13 to 16 at 25°C with the proviso that said other monomers c) comprise less than 5 weight percent of cationic monomers, less than 15 weight percent of free acid monomers and less than 3 weight percent of metal or ammonium salts of acid monomers.

2. The polymer of Claim 1 wherein said polymer has recurring units having the structure:

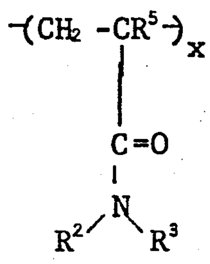

and

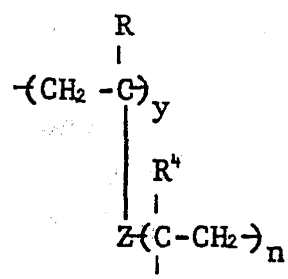

and $-(R^1)_z-$

wherein Z is a linking group; R and $R^4$ are individually hydrogen or methyl; $R^1$ represents recurring units in the polymer of one or more polymerized addition polymerizable comonomers; $R^2$ is alkyl of 1 to 6 carbon atoms or aryl; $R^3$ is hydrogen, aryl, or alkyl of 1 to 6 carbon atoms; $R^5$ is H or $CH_3$; n is 1 or 2; x represents 30 to 97 weight percent; y represents 3 to 25 weight percent and z represents 0 to 30 weight percent; with the proviso that $R^1$ comprises less than 5 percent by weight of the polymer that is derived from cationic monomers, less than 15 percent by weight of the polymer that is derived from free acid monomers and

less than 3 percent by weight of polymer that is derived from metal or ammonium salts of acid monomers.

3. The polymer of Claims 1 and 2 wherein Z is selected from the group consisting of alkylenebis(iminocarbonyl), alkylenebis(oxycarbonyl), and arylene.

4. The polymer of Claims 1-3 wherein the N-alkyl-substituted acrylamide is isopropylacrylamide.

5. Poly(N-isopropylacrylamide-co-N,N'-methylenebisacrylamide) (90:10 by weight).

6. The polymer of Claims 1-4 wherein said polymer has a molecular weight of from 100,000 to 1,000,000.

7. An aqueous microgel dispersion characterized in that it comprises the polymer of Claim 1.

8. The dispersion of Claim 7 wherein said dispersion comprises from 8 to 30 percent by weight of said polymer.

9. A photographic element comprising a support having thereover a layer characterized in that the layer comprises the polymer of any one of Claims 1 to 6.

10. The use of the dispersion of Claims 8 or 9 in the coating of a substrate.